# EUROPEAN PATENT APPLICATION

(11) **EP 4 428 023 A1**
(43) Date of publication of application: **11.09.2024**
(21) Application number: 24161609.3
(22) Date of filing: 05.03.2024
(51) Int. Cl.: B62K 3/04, B62K 19/40, B62J 9/12, B62J 11/04, B62K 19/30, B62J 9/10, B62J 9/40

(54) **BICYCLE WITH LATCHING DOOR**

(30) Priority: 10.03.2023 US 202318181984
(71) Applicant: Specialized Bicycle Components, Inc., Morgan Hill, CA 95037 (US)
(72) Inventor: ANTES, Will, San Jose, CALIFORNIA (US); BOWERS, Jeffrey Keith, Bellingham, WASHINGTON (US); MCDONALD, Ryan James, Cupertino, California (US)
(74) Representative: Forresters IP LLP

(57) **Abstract**

A bicycle includes a tube having an edge defining an opening. The bicycle also includes a door having a latching member movable between a latched position and an unlatched position. When the latching member is in the latched position the door is configured to be held in compression between the latching member and the edge of the tube.

## Description

### BACKGROUND

The present disclosure relates to a bicycle, and to a door that at least partially encloses a portion of the bicycle.

### BRIEF DESCRIPTION OF THE DRAWINGS

FIG. 1 is a perspective view of a bicycle according to an embodiment, including a door.
FIG. 2 is a top perspective view of the door.
FIG. 3 is a bottom perspective view of the door.
FIGS. 4-6 are perspective views of a latching assembly on the door.
FIG. 7 is a perspective view of the door, illustrating the latching assembly and a wedged portion of the door.
FIG. 8 is a perspective view a tube of the bicycle, and an opening defined by an edge of the tube.
FIG. 9 is a perspective, cross-sectional view of a first portion of the edge, taken along lines 9-9 in FIG. 8.
FIG. 10 is a perspective, cross-sectional view of a second portion of the edge, taken along lines 10-10 in FIG. 8.
FIG. 11 is a cross-sectional view of the bicycle, illustrating the door being positioned in the opening and latched to the tube.
FIG. 12 is a top perspective view of an insert on the door.
FIG. 13 is a bottom perspective view of the insert.
FIG. 14 is a top perspective view of a door according to another embodiment, and an accessory mount coupled to the door.
FIG. 15 is a bottom perspective view of the door of FIG. 14, illustrating two latching members.
FIG. 16 is a partial, top perspective view of the door of FIG. 14, illustrating ends of one of the two latching members.

### DETAILED DESCRIPTION

Before any constructions of the disclosure are explained in detail, it is to be understood that the disclosure is not limited in its application to the details of construction and the arrangement of components set forth in the following description or illustrated in the accompanying drawings. The disclosure is capable of supporting other constructions and of being practiced or of being carried out in various ways.

According to an exemplary embodiment, a bicycle includes a tube having an edge defining an opening. The bicycle also includes a door having a latching member movable between a latched position and an unlatched position. When the latching member is in the latched position the door is configured to be held in compression between the latching member and the edge of the tube.

According to another exemplary embodiment, a bicycle includes a tube having an opening. The bicycle also includes a door having an insert. The insert includes an insert opening configured to receive a fastener for supporting an accessory mount. The insert is movable from a first position to a second position to change a position of the accessory mount.

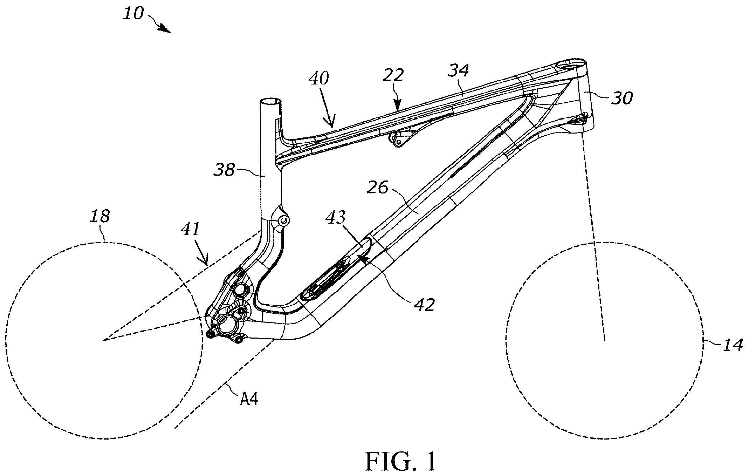

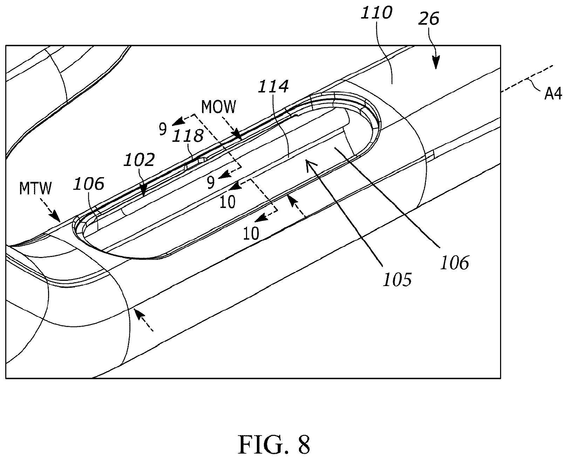

Referring now to the illustrated embodiment, FIG. 1 illustrates a diagram of a bicycle 10 having a front wheel 14, a rear wheel 18, a frame assembly 22 coupled to and supported on the front wheel 14 and the rear wheel 18, and one or more doors 42. The frame assembly 22 may include multiple tubes (e.g., hollow tubes), such as, for example, a down tube 26, a head tube 30, a top tube 34, and/or a seat tube 38. In the illustrated embodiment, the frame assembly 22 includes a front triangle 40 of the bicycle 10, and the front triangle 40 includes the down tube 26, the head tube 30, the top tube 34, and the seat tube 38. Also, the frame assembly 22 includes one or more openings 105 (FIG. 8) corresponding to and/or configured to receive the one or more doors 42.

In further embodiments, the frame assembly 22 may include a rear triangle 41 of the bicycle 10. In these or other embodiments, the bicycle 10 may include one or more other components (e.g., a seat post, a saddle, a front fork assembly, a stem, handlebars, a drive train, braking mechanisms, shifting mechanisms, etc.).

With reference to FIGS. 1-7, the one or more doors 42 at least partially enclose an interior of the frame assembly 22. In the illustrated embodiment, the bicycle 10 and the one or more doors 42 include one door 43 that at least partially encloses an interior of the down tube 26. For example, the door 43 can correspond to and/or be received by an opening 106 (FIG. 8) of the one or more openings 105 (FIG. 8). As illustrated in FIG. 1, the door 43 is located at or near a lower end of the down tube 26. In other embodiments, the door 43 may be positioned at another location of the down tube 26, such as, for example, at or near a middle of the down tube 26, or at or near an upper end of the down tube 26 (e.g., proximal to the head tube 30) opposite the lower end of the down tube 26. In some embodiments, the one or more doors 42 may include multiple doors (e.g., two doors), and the one or more openings 105 (FIG. 8) may include multiple openings (e.g., two openings). In these or other embodiments, two or more of the multiple doors and/or two or more of the multiple openings may be similar or identical to, or different than each other. In some embodiments, at least one of the multiple doors may at least partially enclose an interior of the down tube 26, and/or at least one of the multiple doors may at least partially enclose an interior of another portion of frame assembly 22 (e.g., the head tube 30, the top tube 34, and/or the seat tube 38). In further embodiments, at least one of the one or more doors 42 may at least partially enclose interiors of and/or extend between multiple tubes forming the frame assembly 22.

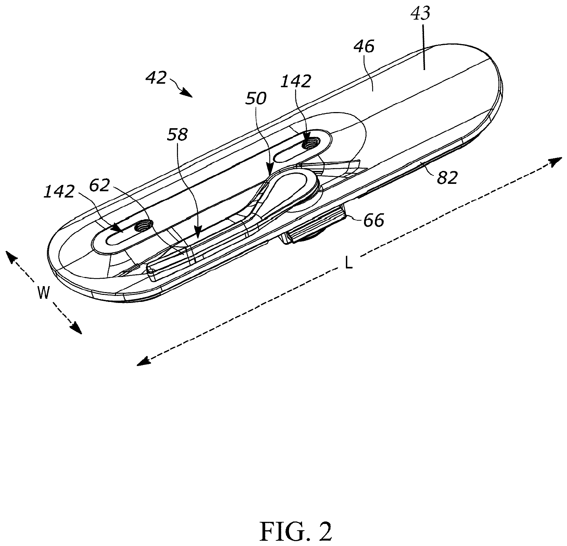

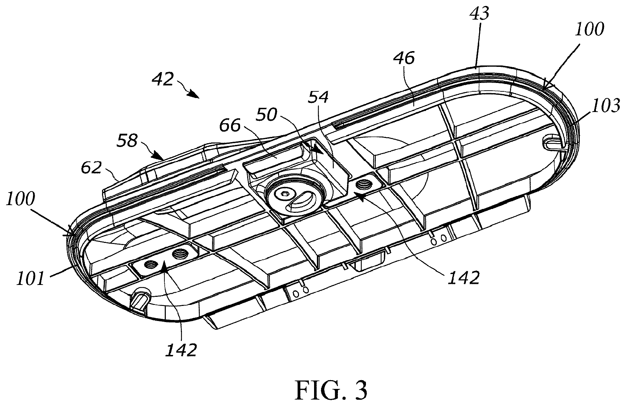

With reference to FIGS. 2 and 3, in the illustrated embodiment the door 43 has a generally oval outer shape, although other embodiments may include other shapes. For example, in some embodiments the door 43 may have a circular shape, a square shape, or a rectangular shape. The door 43 may have an overall length or longest dimension L (FIG. 2) that is measured between ends of the door 43, and an overall width W (FIG. 2) that is measured between sides of the door 43. The length L may be greater than the width W (e.g., at least twice as large as the width W). In some embodiments, the width W of the door 43 may be greater than or equal to 75% (e.g., at least 75%, at least 80%, at least 85%, or at least 90%) of a corresponding width of the down tube 26 (or other tube of the frame assembly 22), such that the door 42 occupies a significant portion of at least one side (e.g., a top side) of the down tube 26. Additionally, in some embodiments the length L may be greater than or equal to 10% (e.g., at least 10%, at least 20%, at least 30%, or at least 40%) of an overall length of the down tube 26 (or other tube of the frame assembly 22). In these or other embodiments the length L may be less than or equal to 50% of an overall length of the down tube 26 (or other tube of the frame assembly).

With reference to FIGS. 2-7, the door 43 may include a main body 46, and a latching assembly 50 that is coupled to the main body 46. As described herein, the latching assembly 50 may be operable to permit the door 43 to be secured in place or permitted to move (e.g., to close, or to open or be removed) relative to the frame assembly 22.

For example, the latching assembly 50 may include a latch body 54 that is coupled (e.g., fixed) to the main body 46 of the door 43. In some embodiments, the latch body 54 may be metal and/or may be co-molded with the main body 46. In these or other embodiments, the main body 46 of the door 43 may be plastic.

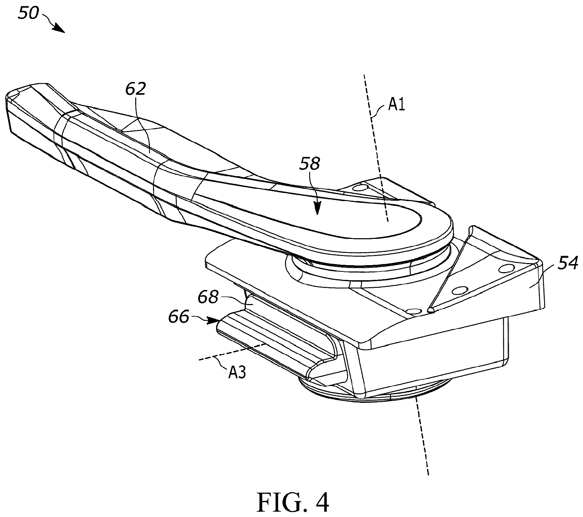

The latching assembly 50 also may include a latch arm 58 that is rotatably coupled to the latch body 54, and that may be rotated about an axis A1 (FIG. 4). The latch arm 58 may include a handle 62 (e.g., lever) that is configured (e.g., sized and shaped) to be gripped by a user to permit the latch arm 58 to be rotated about the axis A1. In the illustrated embodiment, the handle 62 is positioned generally above and adjacent a surface of the main body 46, along one side of the main body 46. Other embodiments may include different locations and/or orientations of the handle 62.

With continued reference to FIGS. 2-7, the latching assembly 50 also may include a latching member 66. The latching assembly 50 may be configured so that latching member 66 is movable to permit the door 43 to be secured in place or permitted to move (e.g., to close, or to open or be removed) relative to the frame assembly 22.

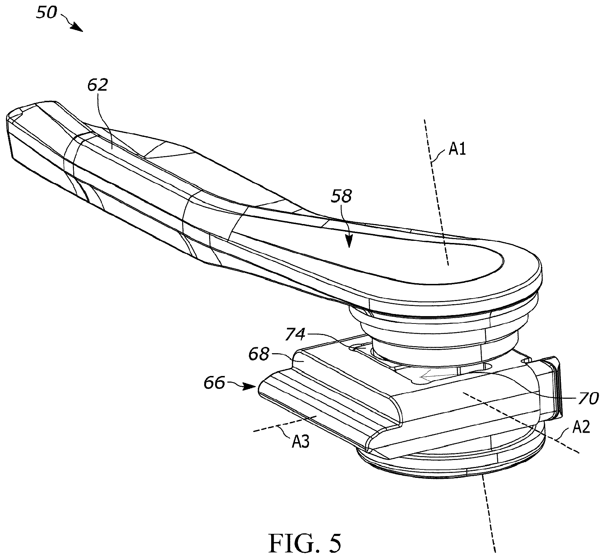

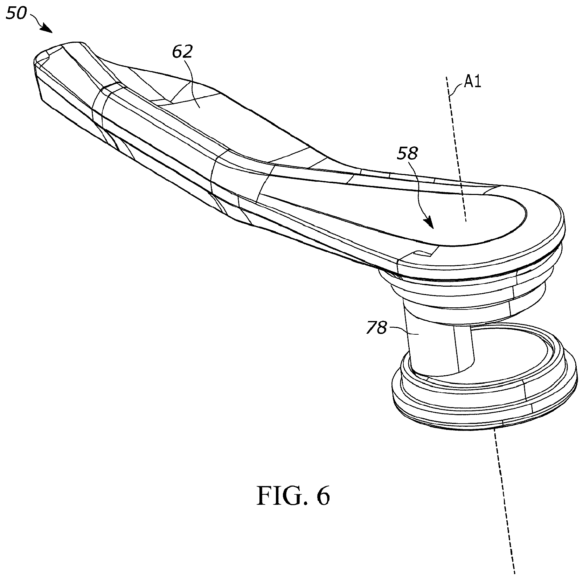

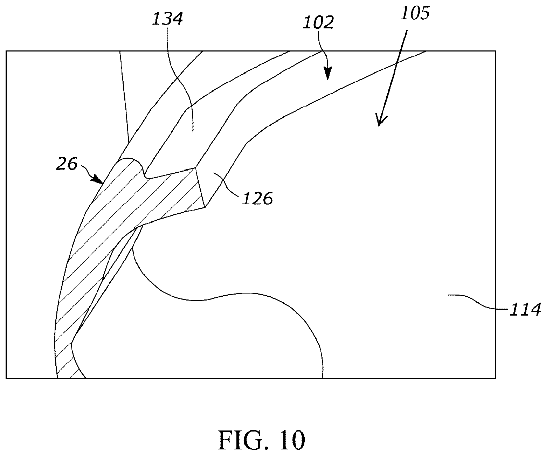

In some embodiments, the latching member 66 may be positioned at least partially within the latch body 54, and may be configured to move linearly relative to the latch body 54 and the main body 46 of the door 43. As illustrated in FIGS. 4 and 5, the latching member 66 may include a latch contact face 68, and a central opening 70 (FIG. 5) that extends entirely through the latching member 66. The latching assembly 50 further may include a slide block 74, and the latch arm 58 may include a bridge element 78 (FIG. 6). The slide block 74 may be positioned at least partially within the central opening 70, and may be coupled (e.g., slidingly) to the bridge element 78 (FIG. 6) of the latch arm 58. The central opening 70 may have a width along an axis A2 (FIG. 5) that is perpendicular to the axis A1. The slide block 74 may be smaller than the width of the central opening 70, and the bridge element 78 may be offset from the axis A1, such that when the handle 62 is rotated about the axis A1, the slide block 74 may both slide along the axis A2 within the central opening 70, and also move the latching member 66 linearly along an axis A3 (FIG. 5) that is perpendicular to both the axis A1 and the axis A2. As illustrated in FIG. 2, in the illustrated embodiment the axis A3 extends perpendicular to a first side edge (e.g., flat side edge) 82 of the main body 46 of the door 43, such that when the handle 62 is rotated, the latching member 66 is moved linearly (e.g., laterally), thereby moving the latching member 66 and/or latch contact face 68 toward or away from a centroid of the latch body 54, the axis Al,and/or a plane that is approximately coplanar with the first side edge 82. Further, moving the latching member 66 may move the latching member 66 and/or the latch contact face 68 away from or toward a plane that is approximately coplanar with an adjacent portion (e.g., a second edge face 126 (FIG. 10)) of an edge 102 (FIG. 8) described in more detail herein. In other embodiments, the axis A3 may extend from the first side edge 82 at an angle other than perpendicular.

In other embodiments, latching assembly 50 may be implemented with one or more mechanisms suitably configured to move the latching member 66 and/or the latch contact face 68 toward or away from a centroid of the latch body 54, the axis A1, and/or a plane that is approximately coplanar with the first side edge 82, and/or away from or toward a plane that is approximately coplanar with an adjacent portion (e.g., a second edge face 126 (FIG. 10)) of an edge 102 (FIG. 8) described in more detail herein. For example, in some embodiment the latching assembly 50 may omit a rotating handle 62. Instead, the latching assembly 50 may include a tab or other projection or element positioned above and/or adjacent the main body 46 that is moved (e.g., pushed or pulled) linearly by hand, to force the latching member 66 to move linearly along the axis A3, toward or away from a centroid of the latch body 54 and/or a plane that is approximately coplanar with the first side edge 82, and/or away from or toward a plane that is approximately coplanar with an adjacent portion (e.g., a second edge face 126 (FIG. 10)) of an edge 102 (FIG. 8) described in more detail herein. Additionally, while the illustrated embodiment includes one latching assembly 50 with one latching member 66, in other embodiments the door 43 may include one or more other latching assemblies similar or identical to latching assembly 50, and/or one or more other latching members similar or identical to latching member 66.

Other embodiments may include a door that is similar to the door 43. For example, the door may include a main body similar or identical to the main body 46 and a latching assembly similar to the latching assembly 50. The latching assembly may include a latch arm similar or identical to the latch arm 58 and a latching member that is similar to the latching member 66 (FIGS. 2-7). The latching member may include a latch contact face 68 that is similar to the latch contact face 68. In these embodiments, the latching member can be coupled to the latch arm, and can be configured to rotate in unison with the latch arm. Meanwhile, as discussed in more detail herein, the latch contact face may be configured (e.g., sized and shaped) to operate as a cam.

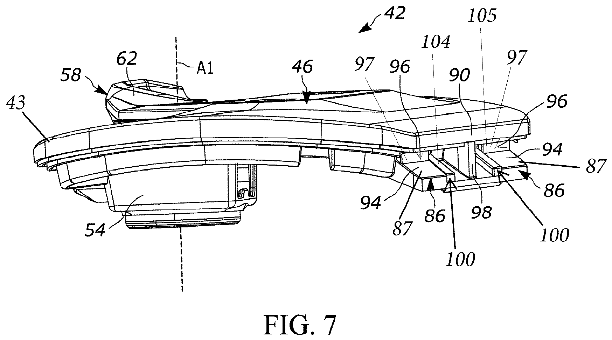

With reference to FIG. 7, the main body 46 of the door 43 may include at least one wedged portion 86. In the illustrated embodiment, the door 43 includes multiple wedged portions 87. In some embodiments, two or more of the multiple wedged portions 87 may be similar or identical to, or different than each other, and the at least one wedged portion 86 may be similar or identical to, or different than one of the multiple wedged portions 87.

For example, the multiple wedged portions 87 may be positioned generally along and/or underneath a second side edge 90 of the main body 46. The second side edge 90 may be located opposite the first side edge 82. The multiple wedged portions 87 include inclined surfaces 94. The inclined surfaces 94 extend at an angle (e.g., an oblique angle) of approximately 45 degrees relative to the axis A1 and/or a plane that is approximately coplanar with the second side edge 90, although in other embodiments the inclined surfaces 94 may extend at other angles, for example between (and including) 40 degrees and 50 degrees, or between (and including) 30 degrees and 60 degrees.

With continued reference to FIG. 7, the main body 46 of the door 43 may include at least one main body contact face 96. In the illustrated embodiment, the main body 46 includes multiple main body contact faces 97. In some embodiments, two or more of the multiple main body contact faces 97 may be similar or identical to, or different than each other, and the at least one main body contact face 96 may be similar or identical to, or different than one of the multiple main body contact faces 97.

For example, the multiple main body contact faces 97 may be positioned above the inclined surfaces 94. The main body contact faces 97 may form oblique angles with the inclined surfaces 94. In other embodiments, other quantities and/or orientations of main body contact faces 97 may be implemented.

With continued reference to FIG. 7, the main body 46 of the door 43 may include at least one alignment feature that may be used to facilitate alignment of the door 43 with the opening 106 (FIG. 8). For example, in the illustrated embodiment the main body 46 includes a first alignment feature in the form of a boss 98 that extends between the multiple wedged portions 87, and is positioned underneath the second side edge 90. The boss 98 may be configured (e.g., sized and shaped) to fit into a corresponding recess in the frame assembly 22, to facilitate alignment of the door 43 with the opening 106 (FIG. 8). In other embodiments the main body 46 may include more than one or more other bosses similar or identical to, or different than boss 98, or may instead include one or more recesses that are configured (e.g., sized and shaped) to receive a corresponding boss or bosses on the frame assembly 22, again to facilitate alignment of the door 42 with the opening 106 (FIG. 8). In other embodiments the boss 98 may be located at a different location along the side of the main body 46 than that illustrated. With reference to FIGS. 1 and 8-10, the frame assembly 22 (e.g., down tube 26 or another tube of the frame assembly 22) may define a longitudinal axis A4, and may include an edge 102 that defines the opening 106 in the frame assembly 22 (e.g., the down tube 26 or another tube of the frame assembly 22). In some embodiments, the edge 102 may extend perpendicular to the longitudinal axis A4. In these or other embodiments, the longitudinal axis A4 may extend parallel to the axis A3 when the door 43 is positioned in the opening 106. As illustrated in FIGS. 8-10, the opening 106 may extend through a wall 110 of the frame assembly 22 (e.g., down tube 26 or another tube of the frame assembly 22), thereby exposing a hollow interior 114 (e.g., storage compartment) within the frame assembly 22 (e.g., the down tube 26 or another tube of the frame assembly 22). The opening 106 may be sized and shaped to receive the door 43. For example, in the illustrated embodiment, the opening 106 has a generally oblong or oval shape corresponding to an outer oblong or oval shape of the door 43. As illustrated in FIG. 8, the edge 102 may include and/or define at least one second alignment feature configured to engage the first alignment feature. In the illustrated embodiment, the edge 102 includes a recess 118 that is configured (e.g., sized and shaped) to receive the boss 98, to facilitate alignment of the door 43 with the opening 106.

With reference to FIG. 8, in some embodiments, the frame assembly 22 (e.g., down tube 26 or other tube of the frame assembly 22) may have a maximum tube width "MTW" as measured along a direction that is perpendicular to the longitudinal axis A4, and the opening 106 may have a maximum opening width "MOW" as measured along that same direction. The maximum opening width of the opening 106 may be greater than or equal to 70% (e.g., at least 70%, at least 80%, or at least 90%) of the maximum tube width of the frame assembly 22 (e.g., down tube 26 or other tube of the frame assembly 22).

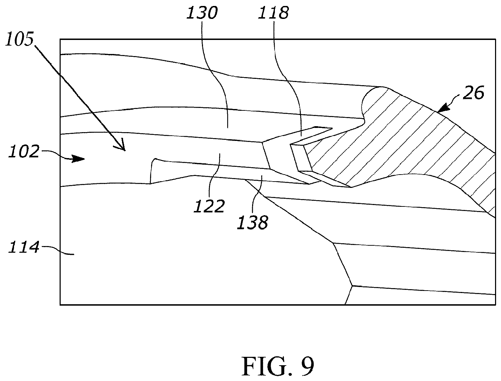

With reference to FIGS. 9 and 10, the edge 102 includes a first edge face 122 (e.g., planar surface) on one side of the opening 106, and a second edge face 126 (e.g., planar surface) on an opposite side of the opening 106. The first edge face 122 generally faces the second edge face 126, and vice versa. In some embodiments, the first edge face 122 extends parallel to the second edge face 126, and vice versa. In the illustrated embodiment, the first edge face 122 extends perpendicular to a first ledge face 130 (e.g., upper planar surface), and the second edge face 126 extends perpendicular to a second ledge face 134 (e.g., upper planar surface). In some embodiments, the first ledge face 130 is co-planar or approximately co-planar with the second ledge face 134. As illustrated in FIG. 9, the edge 102 also may include an inclined face 138, positioned opposite the first ledge face 130 and extending at an angle (e.g., 45 degrees, or between and including 30 degrees and 60 degrees) relative to the first edge face 122.

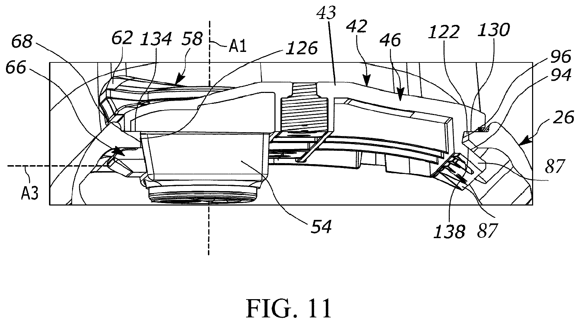

With reference to FIG. 11, the door 43 may be coupled to the frame assembly 22 (e.g., the down tube 26 or other tube of the frame assembly 22), such that the door 43 is held in compression (e.g., lateral compression along the axis A3) between the latching member 66 and the edge 102 of the frame assembly 22. For example, the main body 46 of the door 43 may first be tilted and lowered into the opening 106 (e.g., along the axis A1), until the boss 98 aligns with the recess 118, the multiple wedged portions 87 are generally positioned underneath the first ledge face 130 and/or the inclined face 138, and the main body 46 is generally positioned near the first ledge face 130. The main body 46 of the door 43 may then be pivoted relative to the first edge face 122, generally to a position as shown in FIG. 11 where the main body 46 is generally positioned near the second ledge face 134. Once the main body 46 is pivoted into this position, the handle 62 may be rotated by hand about the axis A1, causing the latching member 66 to slide linearly (e.g., laterally outwardly away from the axis A1), until the latch contact face 68 presses against the second edge face 126 of the edge 102. As seen in FIG. 11, this may cause a portion of the latching member 66 to slide underneath the second ledge face 134. The movement and engagement of the latch contact face 68 against the edge 102 forces the rest of the door 43 to be pressed laterally in an opposite direction (i.e., to the right in FIG. 11), until the multiple main body contact faces 97 engage and press against the first edge face 122 of the edge 102, thereby placing the entire door 43 in lateral compression. In some embodiments, this movement also may cause the inclined surfaces 94 to be placed into compression with the inclined face 138, such that the door 42 is also compressed, at least to a limited degree, vertically (i.e., along a direction parallel to the axis A1).

Use of a latching assembly 50 including a latching member 66 that moves linearly, and places the door 43 in lateral compression, may advantageously reduce or eliminate rubbing against the latching member 66, and/or maintain a tight seal of the door 43 within the opening 106. For example, if the latching member 66 were required to rotate underneath and slide laterally along and against the edge 102, the latching member 66 may, over time, become worn due to frictional engagement with the edge 102, and vice versa. By comparison, the latching member 66, and its latch contact face 68, may move linearly and press directly and laterally against the edge 102, inhibiting or preventing such wear.

Use of a latching assembly 50 including a latching member 66 that moves linearly as described above may advantageously permit opening 106 to be larger, thereby making it easier to pass items through opening 106. For example, if the latching member 66 were required to extend a significant distance under a large wall of the down tube 26 to latch the door 42 in place, the opening 106 may need to be reduced in size, to permit the inclusion of such a wall adjacent the opening 106. In contrast, the latching member 66, and its latch contact face 68, may move linearly and press directly and laterally against a face of the down tube 26, reducing the need for a large wall, and therefore allowing the opening 106 to be large (e.g., making it easier to remove items from the hollow interior 114). In some embodiments, the opening 106 may be as large, or nearly as large, as an overall width of the down tube 26.

Meanwhile, in other embodiments where the door 43 includes the latching assembly having the latching member with a latch contact face configured to operate as a cam as described above, the latching assembly can be configured to operate in a similar manner to latching assembly 58 (FIGS. 2-7) but, rather than linear motion of the latching member bringing the latch contact face into contact and compression with the second edge face 126 of the edge 102, rotational motion of the latching member and the cam configuration of the latch contact face can bring the latch contact face into contact and compression with the second edge face 126 of the edge 102. Use of such a latching assembly may advantageously reduce complexity and manufacturing costs of the latching assembly, such as, for example, relative to that of latching assembly 50.

With reference to FIGS. 3 and 7, the door 43 may include one or more pads 100. The one or more pads 100 can be configured to form a seal between the door 43 and the frame assembly 22 (e.g., down tube 26 or another tube of the frame assembly 22) when the door 43 is received at the opening 106. Further, the one or more pads 100 can prevent the door 43 from rattling when it is received at the opening 106. The one or more pads 100 may be rubber or another resilient material, and/or may be co-molded with the main body 46.

In some embodiments, the one or more pads 100 may include a first pad 101 (FIG. 3), a second pad 103 (FIG. 3), a third pad 104 (FIG. 7), and a fourth pad 105 (FIG. 7). The first pad 101 and the second pad 103 may be positioned at the main body 46 to contact the first ledge face 130 and the second ledge face 134 when the door 43 is received at the opening 106. Further, the third pad 104 and the fourth pad 105 may be positioned at the inclined surfaces 94 to contact the inclined face 138 when the door 43 is received at the opening 106.

With continued reference to FIG. 11, in some embodiments the door 43 may be coupled to the frame assembly 22 (e.g., down tube 26 or another tube of the frame assembly 22) without the use of any additional intermediate elements (e.g., picture-frame-like elements) positioned between the door 43 and the frame assembly 22 (other than for example a gasket(s)). For example, the main body 46 of the door 43 itself may be in direct contact with the first ledge face 130 and the second ledge face 134 of the frame assembly 22, without any element positioned therebetween, or only a gasket(s) may be positioned between the main body 46 and the frame assembly 22. This may be advantageous, because reducing or eliminating such intermediate elements may save weight, and/or permit a larger opening 106, thereby making it easier to remove items from the hollow interior 114.

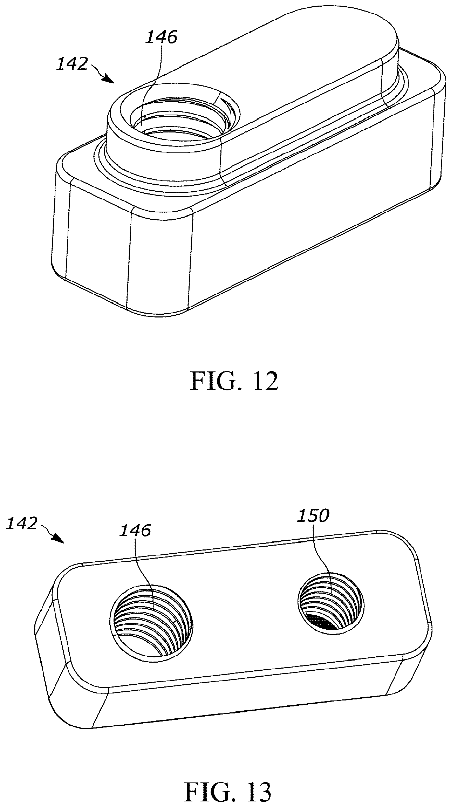

With reference to FIGS. 2, 3, 12, and 13, the door 43 may include one or more inserts 142 that may be used to retain a component outside of the door 43, and/or retain a component interior of the door 43 and within the hollow interior 114 of the frame assembly 22 (e.g., down tube 26 or other tube of the frame assembly 22). In the illustrated embodiment, the door 43 includes two inserts 142 that are generally spaced apart from one another along the length L of the door 43 (e.g., along a direction parallel to the axis A2). Each of the inserts 142 is coupled (e.g., removably coupled) to the main body 46 of the door 43, and is visible along both a top of the main body 46 (FIG. 2) and also along a bottom of the main body 46 (FIG. 3). As illustrated in FIGS. 12 and 13, each of the inserts may include one threaded through-aperture 146, and also one threaded blind aperture 150. The threaded blind aperture 150 may face away from the bottom of the main body 46, and into the hollow interior 114 of the frame assembly 22 (e.g., down tube 26 or other tube of the frame assembly 22). Other embodiments include different numbers of threaded apertures than that illustrated. For example, in some embodiments, at least one of the inserts 142 includes just a single threaded through-aperture 146, and does not include a threaded blind aperture 150. In some embodiments, at least one of the inserts 142 includes just a single threaded blind aperture 150, and does not include a threaded through aperture 146. In some embodiments, only a single insert 142 is provided, or no inserts 142 are provided.

The inserts 142 may be used to couple a component, such as a water bottle cage, to the outside of the door 43. For example, fasteners (not shown) may be inserted through the water bottle cage and into the threaded through-apertures 146, to secure the water bottle cage to the door 43. In some embodiments, if the user desires to change a position of the water bottle cage (or other components), the user may remove the inserts 142 from the main body 46 of the door 43, rotate each of the inserts 180 degrees (e.g. about an axis that is parallel to the axis A1), re-insert the inserts 142 into the main body 46, and then attach the water bottle cage. The inserts 142 may be tightly, frictionally fitted (e.g., press fit) into the main body 46 (yet be removable), and/or may rest of on one or more ledges or other features of the main body 46. In some embodiments, the fastener described above may extend entirely through the threaded through aperture 146, and a nut or other fastener may then be used along a bottom of the main body 46 to secure the component to the main body 46.

The inserts 142 may also, or alternatively, be used to couple a component to the bottom of the door 43. For example, it may be desirable to store or hold a component (e.g., CO₂ canister or other tool) within the hollow interior 114 of the frame assembly 22 (e.g., down tube 26 or other tube of the frame assembly 22). Fasteners may therefore be extended through the component, and up into the threaded blind apertures 150, to secure the component to the bottom of the main body 46 of the door 43. As described above, different embodiments may include different numbers of inserts 142 than that illustrated (e.g., just a single insert, or three inserts, four inserts, etc.). Additionally, in some embodiments the main body 46 itself may include one or more threaded apertures (e.g., through-apertures or blind apertures) that may be used to facilitate attachment of one or more components to the door 43.

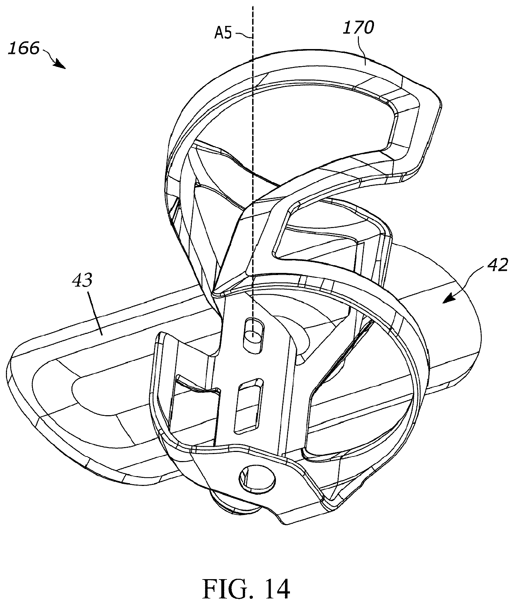

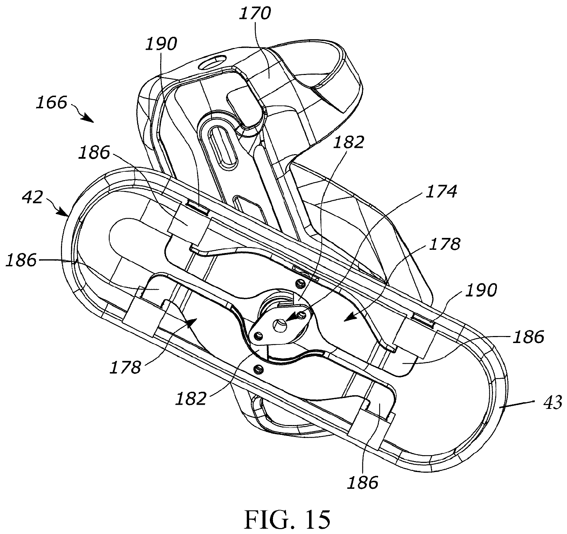

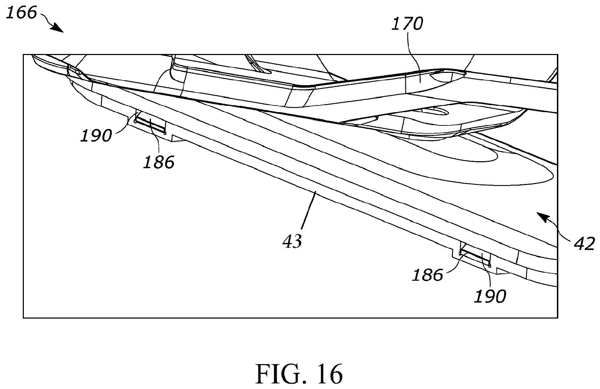

With reference to FIGS. 14-16, in some embodiments the door 43 may include a latching assembly 166 that is activated by rotation of an accessory mount 170. In the illustrated embodiment, the accessory mount 170 is a water bottle cage, although in other embodiments the accessory mount 170 may be another type of accessory mount (e.g., for a different type of bottle or component held along an exterior of the frame assembly 22). As illustrated in FIGS. 14-16, the latching assembly 166 may include a cam 174 that is coupled (e.g., fixed) to the accessory mount 170, such that rotation of the accessory mount 170 about an axis A5 causes rotation of the cam 174 about the same axis A5. In the illustrated embodiment, the cam 174 is positioned generally centrally within the door 43, and along a bottom of the door 43, although in other embodiments the cam 174 may be positioned at a different location. The latching assembly 166 may also include at least one latching member 178 that is activated and moved by rotation of the cam 174. For example, in the illustrated embodiment, the cam 174 is coupled to links 182, and the links 182 are coupled to the latching members 178. As illustrated in FIG. 16, each of the latching members 178 includes two arms 186. Distal ends of these arms 186 are sized and positioned to be disposed within apertures 190 formed along the door 43.

With continued reference to FIGS. 14-16, when the accessory mount 170 is rotated in a first direction about the axis A5, the cam 174 also rotates in the first direction about the axis A5, causing the links 182 to press against the latching members 178. This pressing forces the latching members 178 laterally apart from one another, from an unlatched position to a latched position. In the latched position, the distal ends of the arms 186 extend through the apertures 190 and press against the edge 102 of the frame assembly 22 (e.g., down tube 26 or other tube of the frame assembly 22), laterally compressing the door 43 in place within the opening 106. When the accessory mount 170 is rotated in a second, opposite direction about the axis A5, the latching members 178 may move linearly and return back to the unlatched position.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Representative features are set out in the following clauses, which stand alone or may be combined, in any combination, with one or more features disclosed in the text and/or drawings of the specification.

### REPRESENTATIVE FEATURES

Clause 1. A bicycle comprising:
a tube having an edge defining an opening; and
a door having a latching member movable between a latched position and an unlatched position, wherein when the latching member is in the latched position the door is configured to be held in compression between the latching member and the edge of the tube.

Clause 2. The bicycle of clause 1, wherein the tube defines a longitudinal axis, wherein the edge extends perpendicular to the longitudinal axis, and wherein the door is configured to be held in compression along an axis that is parallel to the longitudinal axis and perpendicular to the edge.

Clause 3. The bicycle of any one of the preceding clauses, wherein the tube defines a longitudinal axis, wherein the door includes a wedged portion having an inclined surface that extends orthogonal to the longitudinal axis when the door is coupled to the tube and positioned within the opening, wherein the inclined surface is configured to engage the edge of the tube.

Clause 4. The bicycle of any one of the preceding clauses, wherein the door includes a main body, and wherein the latching member is coupled to the main body and is configured to move linearly relative to the main body between the latched position and the unlatched position.

Clause 5. The bicycle of any one of the preceding clauses, wherein the door includes a first alignment feature and the tube includes a second alignment feature, wherein the second alignment feature is configured to engage the first alignment feature to align the door within the opening on the tube.

Clause 6. The bicycle of clause 5, wherein the first alignment feature includes a boss, and wherein the second alignment feature includes a recess.

Clause 7. The bicycle of any one of the preceding clauses, wherein the tube defines a longitudinal axis, and has a maximum tube width as measured along a direction that is perpendicular to the longitudinal axis, wherein the opening has a maximum opening width as measured along the direction, wherein the maximum width of the opening is at least 80% of the maximum width of the tube.

Clause 8. The bicycle of any one of the preceding clauses, wherein the door includes a main body and a handle coupled to the main body, wherein rotation of the handle is configured to move the latching member between the latched position and the unlatched position.

Clause 9. The bicycle of any one of the preceding clauses, wherein the door includes an insert having an insert aperture configured to receive a fastener for supporting an accessory mount, wherein the insert is movable from a first position to a second position to change a position of the accessory mount.

Clause 10. The bicycle of any one of the preceding clauses, further comprising an accessory mount coupled to the latching member such that movement of the accessory mount is configured to move the latching member between the latched position and the unlatched position.

Clause 11. A bicycle comprising:
a tube having an opening; and
a door having an insert, wherein the insert includes an insert aperture configured to receive a fastener for supporting an accessory mount, wherein the insert is movable from a first position to a second position to change a position of the accessory mount.

Clause 12. The bicycle of clause 11, wherein the insert aperture is threaded.

Clause 13. The bicycle of clause 11 or clause 12, wherein the insert aperture is a first aperture and is a through aperture, wherein the insert includes a second aperture, wherein the second aperture is a threaded blind aperture.

Clause 14. The bicycle of any one of clauses 11 to 13, further comprising the accessory mount, wherein the accessory mount is a water bottle cage.

Clause 15. The bicycle of any one of clauses 11 to 14, wherein the door includes a latching member, wherein the bicycle further includes an accessory mount coupled to the latching member such that movement of the accessory mount is configured to move the latching member linearly between a latched position and an unlatched position.

Clause 16. A bicycle comprising:
a tube having an opening;
a door having a latching member movable between a latched position and an unlatched position; and
an accessory mount coupled to the latching member such that movement of the accessory mount is configured to move the latching member between the latched position and the unlatched position.

Clause 17. The bicycle of clause 16, wherein the accessory mount is a water bottle cage.

Clause 18. The bicycle of clause 16 or clause 17, wherein the door includes a cam coupled to the accessory mount, such that rotation of the accessory mount is configured to rotate the cam.

Clause 19. The bicycle of clause 18, wherein the latching member is positioned to be engaged and moved linearly by the cam when the cam is rotated.

Clause 20. The bicycle of clause 19, wherein the tube includes an edge defining the opening, wherein the latching member is configured to engage the edge when the cam is rotated.

## Claims

1. A bicycle comprising:
a tube having an edge defining an opening; and
a door having a latching member movable between a latched position and an unlatched position, wherein when the latching member is in the latched position the door is configured to be held in compression between the latching member and the edge of the tube.

2. The bicycle of claim 1, wherein the tube defines a longitudinal axis, wherein the edge of the tube extends perpendicular to the longitudinal axis, and wherein the door is configured to be held in compression along an axis that is parallel to the longitudinal axis and perpendicular to the edge of the tub.

3. The bicycle of any one of the preceding claims, wherein the door includes a wedged portion having an inclined surface, wherein the inclined surface is configured to engage the edge of the tube.

4. The bicycle of any one of the preceding claims, wherein the door includes a main body, and wherein the latching member is coupled to the main body and is configured to move linearly relative to the main body between the latched position and the unlatched position.

5. The bicycle of any one of the preceding claims, wherein the door includes a first alignment feature and the tube includes a second alignment feature, wherein the second alignment feature is configured to engage the first alignment feature to align the door within the opening on the tube.

6. The bicycle of claim 5, wherein the first alignment feature includes a boss, and wherein the second alignment feature includes a recess.

7. The bicycle of any one of the preceding claims, wherein the tube defines a longitudinal axis, and has a maximum tube width as measured along a direction that is perpendicular to the longitudinal axis, wherein the opening has a maximum opening width as measured along the direction, wherein the maximum width of the opening is at least 80% of the maximum width of the tube.

8. The bicycle of any one of the preceding claims, wherein the door includes an insert having an insert aperture configured to receive a fastener for supporting an accessory mount, wherein the insert is movable from a first position to a second position to change a position of the accessory mount.

9. The bicycle of claim 8, wherein the insert aperture is threaded.

10. The bicycle of claim 8 or claim 9, wherein the insert aperture is a first aperture and is a through aperture, wherein the insert includes a second aperture, wherein the second aperture is a threaded blind aperture.

11. The bicycle of any one of claims 8 to 10, further comprising the accessory mount, wherein the accessory mount is a water bottle cage.

12. The bicycle of claim 1, further comprising an accessory mount coupled to the latching member such that movement of the accessory mount is configured to move the latching member between the latched position and the unlatched position.

13. The bicycle of claim 12, wherein the accessory mount is a water bottle cage.

14. The bicycle of claim 12 or 13, wherein the door includes a cam coupled to the accessory mount, such that rotation of the accessory mount is configured to rotate the cam.

15. The bicycle of claim 14, wherein the latching member is positioned to be engaged and moved linearly by the cam when the cam is rotated, and wherein the latching member is configured to engage the edge of the tube when the cam is rotated.
